# EUROPEAN PATENT SPECIFICATION

(11) **EP 2 527 141 B1**
(45) Date of publication and mention of the grant of the patent: **30.07.2014**
(21) Application number: 10843212.1
(22) Date of filing: 28.12.2010
(51) Int. Cl.: B32B 3/26, B32B 15/08

(54) **COMPOSITE STRUCTURAL MEMBER**
STRUKTURELLES VERBUNDSTOFFELEMENT
ÉLÉMENT STRUCTURAL COMPOSITE

(30) Priority: 18.01.2010 JP 2010008462
(43) Date of publication of application: 28.11.2012
(73) Proprietor: Sumitomo Electric Industries, Ltd., Chuo-ku Osaka-shi Osaka 541-0041 (JP)
(72) Inventor: NUMANO, Masatada, Osaka-shi Osaka 554-0024 (JP); MORI, Koji, Itami-shi Hyogo 664-0016 (JP); OKUDA, Nobuyuki, Itami-shi Hyogo 664-0016 (JP); KAWABE, Nozomu, Itami-shi Hyogo 664-0016 (JP)
(74) Representative: Boult Wade Tennant
(86) International application number: PCT/JP2010/073805
(87) International publication number: WO 2011/086860

(56) References cited:
- WO-A1-2005/072930
- DE-A1- 4 124 297
- FR-A1- 2 790 424
- JP-A- 7 124 995
- JP-A- 60 011 338
- JP-A- 2001 315 162
- JP-A- 2004 160 979
- JP-A- 2004 338 218
- JP-A- 2008 201 053
- US-A- 5 350 608

## Description

### Technical Field

The present invention relates to a composite structural member of a metal and a resin, the composite structural member being suitable for parts, such as housings, of electrical and electronic devices. In particular, the present invention relates to a composite structural member having high rigidity even at a small thickness, the composite structural member being easily attachable to a main body of a device or the like.

### Background Art

Hitherto, lightweight resins have been commonly used as materials constituting parts, such as housings, for mobile electrical and electronic devices, e.g., cellular phones, laptop computers, and digital cameras. Resin members have excellent design properties because colors and patterns can be easily provided and because various shapes can be easily formed.

Meanwhile, magnesium alloys, which are light in weight and have excellent specific strength and specific rigidity, have been studied as materials constituting parts, such as housings. Parts composed of magnesium alloys are mainly cast materials (AZ91 alloys complying with the American Society for Testing and Materials (ASTM) standard) produced by a die casting method or a thixomold method. In recent years, parts produced by subjecting sheets composed of wrought magnesium alloys, typified by AZ31 alloys complying with the ASTM standard, to press forming have been used. PTL 1 discloses a pressed material produced by subjecting a rolled sheet composed of a magnesium alloy corresponding to AZ91 to press forming.

Metal members composed of magnesium alloys and so forth have superior strength and rigidity to resin members and thus are easily reduced in thickness. Furthermore, metal members can be subjected to desired painting or surface finishing as described in PTL 1 to achieve better design properties.

### Citation List

### Patent Literature

PTL 1: Japanese Unexamined Patent Application Publication No. 2009-120877

### Summary of Invention

WO2005/072930 discloses a moulded plastic article having a plastic substrate component with an adhered sheet material surface piece where at least part of the sheet material edges and sheet material surface area adjacent the edges are overlapped by a molded-on, plastic edge- covering component and the sheet material is a thin, semi-rigid sheet material of metal, to be selected from aluminium, magnesium or titanium. Said metal sheet has a thickness in the range 0.01 to 6mm, especially 0.05mm in Example 1.

### Technical Problem

However, in conventional structural members, it is difficult to further reduce the thickness and to facilitate the attachment of structural members to target objects, such as main bodies of devices and other parts, while maintaining high strength and rigidity.

Resin members are formed by metallic molding, such as injection molding and thus have a high degree of flexibility in shape. Attaching portions, such as claw portions, bosses for bolt holes, and bosses for tapped holes, configured to attach the members to target objects can be easily formed. Thus, resin members are easily attached to target objects by hooking or fitting claw portions into target objects or by the use of clamping members, such as bolts and screws. Furthermore, in resin members, locally thick portions, such as bosses and ribs, configured to enhance strength and rigidity are easily formed. However, in resin members, it is difficult to reduce the thickness of the entirety of each member while maintaining high strength and rigidity.

Meanwhile, metal members, it is difficult to form attaching portions, such as claw portions and bolt holes, as compared with resin members. Specifically, it is difficult to form attaching portions by a simple forming process, such as press forming. Attaching portions can be roughly formed by, for example, die casting. However, in order to adjust the shape, it is necessary to perform another process, such as cutting. Thus, processes for manufacturing metal members including attaching portions lead to poor productivity and poor yields. From this point of view, it is difficult to attach metal members to target objects.

Furthermore, for metal members, it is generally difficult to form bosses and ribs, compared with resin members. Nowadays, electrical and electronic devices that establish radio communications are increasing. In the case of devices having such functions, housings preferably include nonmetallic portions that do not shield electromagnetic waves. In addition, there remains a need for the development of a technique other than painting, the technique being able to correspond to various designs and, in particular, being able to be easily performed, as compared with painting.

Accordingly, it is an object of the present invention to provide a composite structural member having high rigidity even at a small thickness and having excellent design properties and mounting workability.

### Solution to Problem

In the present invention, the object is achieved by forming a composite structure according to claim 1 of a metal and a resin, the composite structure including a resin film layer. A composite structural member of the present invention includes a metal base material, a resin formed article, and a resin film layer that covers at least part of a surface of the metal base material. In particular, in the composite structural member, at least part of the metal base material has a thickness of 50 µm or more, and at least part of the resin formed article is joined to at least one of the metal base material and the resin film layer.

The composite structural member of the present invention includes both of the metal base material and the resin formed article and thus has high strength and rigidity even at a small thickness, as compared with the case of a resin member alone. In particular, in the composite structural member of the present invention, at least part of the metal base material has a large thickness of 50 µm or more. Thus, high strength and rigidity can be ensured, as compared with, for example, when a metal thin film having a thickness on the order of nanometers is arranged on a resin member.

Furthermore, in the composite structural member of the present invention, an attaching portion, such as a claw portion or a bolt hole, can be easily formed in the resin formed article. Thus, the composite structural member is easily attached to a target object appropriately using a clamping member, such as a bolt, and has excellent mounting workability.

Moreover, in the composite structural member of the present invention, a resin film having a desired design (e.g., color and pattern) can be used as the resin film layer to decorate the composite structural member. Thus, the composite structural member of the present invention has excellent design properties. In addition, the resin film is just jointed to the metal base material, so that the composite structural member having excellent design properties is provided. Hence, the composite structural member of the present invention has excellent productivity.

The present invention will be described in further detail below.

### [Metal Base Material]

### (Configuration and Shape)

For example, a metal base material with shape with a portion in which at least part of the portion has a thickness of 50 µm (0.05 mm) or more. A typical example of the metal base material is a sheet-like material having a substantially uniform thickness. Other examples of the metal base material include materials each having partially different thicknesses, e.g., sheet-like materials having appropriate shapes and numbers of protrusions and depressions and perforated sheet-like materials having appropriate shapes and numbers of protrusions and depressions; and materials having desired three-dimensional configurations, i.e., materials having square bracket-shaped cross sections, L-shaped cross sections, and cylindrical shapes. Materials having protrusions and bent portions can have enhanced strength and rigidity. Materials having protrusions, depressions, and through holes can have various designs.

A larger thickness of the metal base material results in a composite structural member having higher strength and rigidity. However, a higher proportion of the metal base material in the composite structural member results in an increase in the weight of the entire composite structural member. Thus, while the metal base material may partially have a thick portion (with a thickness exceeding 2 mm), most of the metal base material (more than 50% by area when the maximum area of the metal base material in plan view is 100% by area) has a thickness of 2 mm or less and more preferably about 0.3 mm to about 1.5 mm.

Furthermore, one composite structural member may include a plurality of metal base materials. Each of the metal base materials may be bonded to at least one of resin formed article and a resin film layer to integrally form a single composite structural member. For one composite structural member, a plurality of portions are required to have improved strength and provide electromagnetic shielding, in some cases. In this configuration, the plural metal base materials can be separately arranged to meet the foregoing requirements. Furthermore, in this configuration, it is possible to achieve a reduction in weight and improvement in the strength of the member.

### (Production Method)

The metal base material can be produced through various steps, such as casting, extrusion, rolling, forging, and pressing (typically, bending work and drawing). For the production, known production conditions may be appropriately used. Examples of the configuration of the resulting metal base material include cast materials, extruded materials, rolled materials, forged materials, pressed materials, other materials that have been subjected to plastic forming, and treated materials obtained by subjecting these materials to at least one treatment selected from heat treatment, polishing, flattening, cutting, anticorrosion treatment, and surface finishing as described in PTL 1. In the case where the metal base material is a cast material, it is possible to easily form any three-dimensional shape. A metal base material obtained by subjecting a cast material to plastic forming, such as extrusion, rolling, forging, or pressing, has higher strength and rigidity owing to work hardening. A metal base material that has been subjected to polishing, flattening, surface finishing, or the like has excellent design properties. A metal base material that has been subjected to anticorrosion treatment has excellent corrosion resistance. Furthermore, heat treatment is performed, thereby resulting in a uniform composition and the elimination of strain due to plastic forming. Cutting provides a metal base material having a predetermined size and thickness. The metal base material may be appropriately produced and used so as to have a predetermined shape and configuration.

### (Mechanical Strength)

### [Young's Modulus]

In the case where the metal base material has a Young's modulus of 40 GPa or more, the metal base material is not easily distorted and can have high rigidity even at a smaller thickness. The Young's modulus is mainly determined by the type of metal material. When a given metal is subjected to plastic forming, such as rolling, the Young's modulus of the metal tends to increase. The choice of a metal material having a Young's modulus of 50 GPa or more and even 100 GPa or more and the choice of the configuration of the metal base material result in a composite structural member having high rigidity even at a smaller thickness of the metal base material.

### [0.2% Proof Stress]

In the case where the metal base material has a 0.2% proof stress of 150 MPa or more, denting and deformation do not occur easily even at a smaller thickness, so that a predetermined shape can be maintained over prolonged periods of time. The 0.2% proof stress is mainly determined by the type of metal material. When a given metal is subjected to plastic forming, such as rolling, the 0.2% proof stress of the metal tends to increase. The choice of a metal material having a 0.2% proof stress of 200 MPa or more and even 250 MPa or more and the choice of the configuration of the metal base material result in a composite structural member having high rigidity even at a smaller thickness of the metal base material.

### [Thermal Expansion Coefficient]

In the case of a metal base material composed of a uniform material, if a local temperature difference occurs, the metal base material can be locally warped. Thus, the temperature of the material is preferably controlled during the formation of the resin formed article in such a manner that a temperature difference between the maximum temperature region and the minimum temperature region of the metal base material composed of a uniform material is 50°C or less, preferably 15°C or less, more preferably 5°C or less, and most preferably a temperature such that a uniform temperature is obtained over substantially the entire metal base material. The foregoing temperature control can suppress the deformation of the resulting composite structural member after forming.

To achieve the foregoing temperature control, for example, for example, in a die used to unify the metal base material, the resin formed article, and the resin film, a cooling means is arranged on a component of the die where the metal base material is placed. The cooling means is arranged in a region (hereinafter, referred to as a "specific region") of the die with which the metal base material comes into direct contact or contact via the resin film layer, thereby resulting in the uniform temperature of the entire surface of the metal base material to inhibit an increase in local temperature. Specific examples of the cooling means are as follows: the surface of the specific region is composed of a high-thermal-conductivity material, for example, copper or a copper alloy; a member composed of the high-thermal-conductivity material is arranged on the specific region; and a circulation mechanism that circulates a refrigerant in a portion composed of the high-thermal-conductivity material is arranged. Alternatively, in order to achieve the foregoing temperature control, for example, a heating means, such as a heater, is arranged on the specific region of the die or over the entire die and uniformly heats the entire surface of the metal base material. The cooling temperature, the heating temperature, the cooling region, and the heating region may be appropriately selected, depending on materials of the metal base material, the resin film layer, and the resin formed article.

At a thermal expansion coefficient of the metal base material of 8 × 10⁻⁶ /K or more, when the member is released from the die accommodating the metal base material, the resin formed article, and the resin film, the metal base material is less likely to warp, thereby easily maintaining a predetermined shape. The thermal expansion coefficient is mainly determined by the type of metal material. In the case where a metal having a thermal expansion coefficient of 10 × 10⁻⁶ /K or more and even 20 × 10⁻⁶ /K or more is selected, the resulting composite structural member easily maintains its predetermined shape even at a smaller thickness of the metal base material.

### (Component)

Specific examples of the type of metal material constituting the metal base material include pure magnesium, magnesium alloys, pure titanium, titanium alloys, pure aluminum, aluminum alloys, pure iron, and iron alloys (including steel and stainless steel). Each of the metals satisfies a Young's modulus of 40 GPa or more, a 0.2% proof stress of 150 MPa or more, and a thermal expansion coefficient of 8 × 10⁻⁶ /K or more and has high rigidity. Thus, denting and deformation, such as warpage, do not occur easily, and a predetermined shape is easily maintained over prolonged periods of time. The deformation and so forth do not occur easily, so that a design on the basis of the metal base material (for example, a design produced by surface finishing as described in PTL 1) can be maintained over prolonged periods of time.

In particular, in the case where at least part of the metal base material is composed of at least one of pure magnesium, magnesium alloys, pure titanium, and titanium alloys, the metal base material can meet a demand for a further reduction in thickness because these metals are excellent in strength and rigidity. Furthermore, pure magnesium, magnesium alloys, pure titanium, and titanium alloys are lighter than iron and iron alloys. Thus, the arrangement of a metal base material composed of the metal results in a lightweight composite structural member.

In particular, magnesium and magnesium alloys have high specific strength and high specific rigidity. Thus, the arrangement of a metal base material composed of magnesium or a magnesium alloy results in a composite structural member having high strength and high rigidity. As magnesium, magnesium containing Mg and impurities is exemplified. Examples of magnesium alloys include alloys each containing at least one element selected from Al, Zn, Mn, Si, Ca, Sr, Y, Cu, Ag, Sn, Li, Zr, and rare-earth elements (excluding Y) in a total amount of 0.01 % by mass to 20% by mass, and the balance being Mg and impurities. In particular, Al-containing magnesium alloys have excellent corrosion resistance and excellent mechanical properties, such as strength, and thus are preferred. Examples of Al-containing magnesium alloys include AZ-based alloys (Mg-Al-Zn-based alloys, Zn: 0.2% by mass to 1.5% by mass), AM-based alloys (Mg-Al-Mn-based alloys, Mn: 0.15% by mass to 0.5% by mass), As-based alloys (Mg-Al-Si-based alloys, Si: 0.6% by mass to 1.4% by mass), Mg-Al-RE (rare-earth element)-based alloys, AX-based alloys (Mg-Al-Ca-based alloys, Ca: 0.2% by mass to 6.0% by mass), and AJ-based alloys (Mg-Al-Sr-based alloys, Sr: 0.2% by mass to 7.0% by mass), which comply with the American Society for Testing and Materials (ASTM) standard. Examples of Al-containing magnesium alloys each having an Al content of more than 7.5% by mass and 12% by mass or less include Mg-Al-Zn-based alloys, such as AZ80 alloys, AZ81 alloys, and AZ91 alloys, and Mg-Al-Mn-based alloys, such as AM 100 alloys, which have higher corrosion resistance and thus are preferred. A magnesium alloy having a known composition may be used. When a metal base material, composed of a magnesium alloy, having a surface that has been subjected to anticorrosion treatment, e.g., chemical conversion treatment or anodic-oxidation treatment, is used, the corrosion resistance is enhanced. In this case, the resulting composite structural member includes the resin film layer arranged on a corrosion prevention layer.

Titanium may contain Ti and impurities. Examples of titanium alloys include various alloys, such as an alloy containing 6% by mass aluminum-4% by mass vanadium-balance being titanium and impurities, which are specified in JIS H 4600(2007).

Alternatively, at least part of the metal base material may be composed of at least one metal selected from pure aluminum, aluminum alloys, pure iron, and iron alloys. In general, pure aluminum, aluminum alloys, iron, iron alloys have excellent formability in plastic forming, e.g., rolling or pressing, thus easily providing a plastically formed material having a desired shape. Pure aluminum and aluminum alloys are light in weight. Hence, the arrangement of a metal base material composed of pure aluminum or an aluminum alloy results in a lightweight composite structural member. As pure aluminum, aluminum containing Al and impurities may be used. Examples of aluminum alloys that may be used include various alloys, such as A1050, A5052, and A5083, specified in JIS H 4000(2006) and so forth. Pure iron and iron alloys commonly have excellent strength. Thus, the arrangement of a metal base material composed of pure iron or an iron alloy results in a high-strength composite structural member. As pure iron, iron containing Fe and impurities may be used. Examples of iron alloys that may be used include steel, which is an alloy of carbon and iron, stainless steel further containing Ni and Cr, such as SUS304 and SUS316, which are typical examples of iron alloys, and various alloys, such as SS400 and S45C.

The metal base material may be composed of a single type of metal or may be composed of different types of metals. In any case, the metal base material may be formed of a single component. Alternatively, as described above, a plurality of metal base materials may be arranged. In the case where the metal base material is formed of a single component composed of different types of metals, subcomponents of the metals may be integrated by welding, brazing, or pressure welding. In the case where the metal base material composed of different types of metals is arranged, a design based on the different metal materials can be expressed, thereby resulting in the composite structural member having excellent design properties.

### [Resin Formed Article]

### (Shape)

The resin formed article can have any shape depending on an intended application. Specifically, the resin formed article may serve as a main portion constituting the main appearance of the composite structural member. Alternatively, the resin formed article may be used for a portion of the composite structural member. Examples thereof include an attaching portion, such as a claw portion, a bolt hole, and a tapped hole, a stiffening portion, such as a rib, a design portion configured to form a desired design, and a nonmetallic portion for radio communication. In particular, a composite structural member in which at least part of the resin formed article serves as the attaching portion can be easily attached to a target object, such as a main body of an electrical or electronic device. Furthermore, in the case of the composite structural member, the attaching portion can be easily formed, compared with when the attaching portion is formed on the metal base material.

The resin formed article may have any size and any thickness. The composite structural member including the foregoing metal base material has excellent rigidity even when, for example, the resin formed article is in the form of a thin sheet-like article.

Furthermore, a single composite structural member may include a plurality of resin formed articles. Each of the resin formed articles can be joined to at least one of the metal base material and the resin film layer to integrally form one composite structural member.

### (Formation Method)

The resin formed article may be formed by various methods, such as injection molding, transfer molding, cast molding, extrusion molding, and welding. It is possible to integrate the metal base material and the resin film layer together with the formation of the resin formed article. Thus, the composite structural member of the present invention has excellent productivity. Known formation conditions may be appropriately used for the foregoing formation.

### (Constituent)

The resin formed article may be composed of at least one resin of thermoplastic resins, thermosetting resins, and rubber materials. Examples of the resin include polypropylene resins, polyethylene resins, polystyrene resins, polyvinyl chloride resins, polyethylene terephthalate resins, polybutylene terephthalate resins, polycarbonate resins, acrylic resins, epoxy resins, phenolic resins, and silicone resins. Examples of the rubber materials include natural rubber; and synthetic rubber, such as isoprene rubber, styrene rubber, nitrile rubber, chloroprene rubber, acrylic rubber, silicone rubber, and urethane rubber. The resin contained in the resin formed article may be appropriately selected in view of, for example, rigidity, strength, hardness, corrosion resistance, durability, and heat resistance of the composite structural member. The constituent resin may contain a filler composed of, for example, a metal or a nonmetallic material, e.g., a ceramic material, and a color batch in order to enhance mechanical properties, such as rigidity, and to achieve better design properties.

The resin formed article may be composed of a single type of resin or may be composed of different types of resins. In any case, the resin formed article may be formed of a single component. Alternatively, as described above, a plurality of resin formed articles may be arranged. In the case where the resin formed article is formed of a single component composed of different types of resins, the resin formed article may be produced by, for example, sequentially forming subcomponents of the resins into one piece. Alternatively, the resin formed article may be produced by separately forming the subcomponents of the resins and then joining them together into one piece.

### [Resin Film Layer]

### (Whole Structure)

Typically, the resin film layer that covers at least part of the metal base material constitutes at least part of the appearance of the composite structural member. As a resin film constituting the resin film layer, for example, an acrylic film composed of an acrylic resin, e.g., a polymethyl methacrylate (PMMA) resin, a polybutyl acrylate resin, an ethylene-acrylic copolymer resin, or an ethylene-vinyl acetate-acrylic copolymer resin, may be suitably used. The acrylic film has the following features: (1) For a transparent acrylic resin, the acrylic resin has high transparency; (2) the acrylic resin has high resistance to heat and light, so that the degrees of fading and a reduction in gloss are low even when, for example, the acrylic resin is used outdoors; and (3) the acrylic resin has excellent soil resistance. Thus, the resulting composite structural member has excellent appearance. Furthermore, the acrylic film also has excellent formability during processing, such as deep drawing and thus can be suitably used in the production of the composite structural member of the present invention. The acrylic film preferably has a thickness of 50 µm or more in order to sufficiently maintain weatherability and so forth. The acrylic film preferably has a thickness of 500 µm or less in view of a reduction in the thickness of the composite structural member. Thus, the acrylic film having a thickness of about 70 µm to about 200 µm can be easily used. A commercially available acrylic film may also be used.

In the case where the resin film layer is formed of, for example, a colored opaque resin film, the use of a resin film having a desired color and pattern results in better design properties. Meanwhile, in the case where the resin film layer has a visible-light transmittance of 30% or more, the underlying metal base material can be seen, thus resulting in a composite structural member having an excellent metallic texture and better design properties. A higher visible-light transmittance enhances the metallic texture. The resin film layer preferably has a visible-light transmittance of 50% or more and particularly preferably 70% or more. In particular, the use of a high-transmittance acrylic film, specifically, an acrylic film having a visible-light transmittance of about 90%, is more likely to lead to the expression of the metallic texture. The visible-light transmittance of the resin film layer can be investigated by peeling the resin film layer from the composite structural member or removing the resin film layer from the composite structural member by cutting, and then performing an analysis.

As described above, the resin film layer may have a single-layer structure composed of a single type of material or may have a multilayered structure. For example, a resin film including the foregoing acrylic film serving as a base portion and including at least one layer selected from a printed layer having a desired figure or pattern, a thin layer configured to express a metallic luster, a protective layer configured to protect the thin layer and the printed layer, and an adhesive layer configured to bond these layers together, on at least part of the base portion may be used. In the case where the resin film having a multilayered structure is used, the resin film preferably has a total thickness of 2000 µm or less in view of a reduction in thickness and the productivity of the film. In particular, the resin film having a total thickness of about 70 µm to about 200 µm can be easily used. A commercially available resin film having a multilayered structure may be used.

The printed layer includes a resin binder and a colored ink and can be formed by a printing method, e.g., an offset printing method, a gravure printing method, or a screen printing method. Examples of the resin binder include resins, such as polyvinyl-based resins, polyamide-based resins, polyester-based resins, acrylic-based resins, polyurethane-based resins, polyvinyl acetal-based resins, polyester urethane-based resins, cellulose ester-based resins, and alkyd-based resins. Examples of the colored ink include inks containing desired color pigments and dyes serving as colorants. The use of the resin film layer including the printed layer can correspond to various designs.

The thin layer can be easily formed by, for example, an evaporation method, e.g., vacuum evaporation, sputtering, or ion plating, or plating. Examples of a material for the thin layer include metals, such as aluminum, nickel, gold, platinum, chromium, iron, copper, tin, indium, silver, titanium, lead, zinc, and germanium; alloys of the metals; nonmetallic compounds of the metals, such as zinc sulfide, magnesium fluoride, tin oxide, and indium tin oxide; and nonmetallic compounds, such as silicon oxide. The use of the resin film layer including the thin layer composed of a metal results in the expression of a metallic luster and a metallic texture. For example, even if the resin film layer including the thin layer composed of the metal is arranged on the resin formed article, the metallic texture can be easily expressed. In the case where the resin film layer including the thin layer composed of the metal is arranged on the metal base material, the metal base material can be protected. In the case where a material constituting the thin layer is different from a material constituting the metal base material, the composite structural member has better design properties owing to the different types of metals. The use of the resin film layer including the thin layer composed of the foregoing compound results in an increase in visible-light transmittance, the expression of a fluorescent color, and an increase in the hardness of the film.

Examples of the protective film that can be used include the foregoing acrylic films, polypropylene films, thermoplastic elastomer films, polycarbonate films, polyamide films, acrylonitrile-butadiene-styrene films, acrylonitrile-styrene films, polystyrene films, and polyurethane films.

Examples of a material for the adhesive layer configured to bond the thin layer composed of the metal and the protective layer include resins, such as two-part curable urethane resins, thermosetting urethane resins, melamine-based resins, cellulose ester-based resins, chlorine-containing rubber-based resins, chlorine-containing vinyl-based resins, acrylic-based resins, epoxy-based resins, and vinyl-based copolymer resins. The adhesive layer can be formed by a coating method, e.g., a gravure coating method, a roll coating method, or a comma coating method, or a printing method, e.g., a gravure printing method or a screen printing method. As an adhesive layer configured to bond other layers together, an appropriate adhesive suitable for a material constituting each layer may be appropriately used.

### (Through Hole)

An embodiment of the present invention provides a configuration in which the resin film layer includes a plurality of through holes, in which the circumcircle of each of the through holes has a diameter of 5 mm or less.

The resin film layer is formed by joining the resin film to at least part of the metal base material or the resin formed article. If degassing is not sufficiently performed between the resin film and the metal base material or the resin formed article at the time of the joining, bubbles are formed, thereby leading to poor appearance. Meanwhile, in the case where the resin film has minute through holes, degassing is easily performed to inhibit the formation of bubbles, thus resulting in a composite structural member having good appearance. The through holes may have any shape. A typical example of the shape is a circular shape. Other examples of the shape that may be used include elliptical shapes, polygonal shapes, such as, triangular, rectangular, and pentagonal shapes, and any other shapes. The number of the through holes may be selected, depending on the number required for degassing. Furthermore, any configuration of the through holes may be used. In the case where the through holes are uniformly arranged over the entire resin film without locally arranging the through holes in a portion of the resin film, it is possible to uniformly perform degassing and to inhibit a reduction in the strength of the resin film.

At an excessively small diameter of the circumcircle of each through hole, the degassing is not easily performed. A diameter of the circumcircle exceeding 5 mm causes a reduction in the strength of the resin film. In particular, at a diameter of the circumcircle of about 5 µm to about 100 µm, the degassing is sufficiently performed, and the through holes are easily formed. Thus, such a resin film should be easily used. In the case where the resin film also functions as a corrosion-resistant layer for the metal base material, at an excessively large diameter of the circumcircle of each through hole, for example, water, which is a factor in causing corrosion, passes through the through holes to come into contact with the metal base material, thereby leading to a reduction in the corrosion resistance of the metal base material. Thus, in the case where a portion of the resin film layer that covers the metal base material also functions as a corrosion-resistant layer, the diameter of each circumcircle is preferably 100 µm or less. To enhance the corrosion resistance, a smaller diameter is preferred. While the diameter can be less than 0.1 µm, it is thought that a diameter of 0.1 µm or more is easily used. In the case where the resin film layer also functions as a corrosion-resistant layer as described above, an excessively large number of the through holes causes a reduction in corrosion resistance. Thus, the density (number per unit area) of the through holes in the portion of the resin film layer that covers the metal base material is preferably in the range of 30 counts/mm² to 500 counts/mm². Alternatively, the area fraction of the through holes in the portion of the resin film layer that covers the metal base material is preferably in the range of 1% to 70%. Meanwhile, in the case where the through holes each having a diameter of about 5 mm are arranged in a portion of the resin film layer that covers the resin formed article, the through holes are not associated with corrosion resistance. Hence, the diameter may exceed 100 µm. At least one of such relatively large through holes may function as a pattern (e.g., a dot pattern).

### [Additional Configuration]

### (Paint Layer)

An embodiment of the present invention provides a configuration in which a paint layer is further arranged on at least part of the resin film layer.

The paint layer is further arranged on the resin film layer serving as an underlying layer, thereby enhancing the strength, rigidity, and hardness and improving water resistance. Furthermore, the arrangement of the paint layer can result in the protection of the metal base material and the resin formed article. Moreover, the arrangement of the paint layer having a figure or pattern different from that of the resin film layer can result in better design properties. The resin film layer serves as an underlying layer; hence, a surface to be painted is smooth. Thus, painting is easily and uniformly performed, compared with the case where painting is directly performed on a surface of the metal base material, thereby resulting in a composite structural member having excellent surface quality and better design properties.

Any of colored opaque paint, colored transparent paint, and colorless transparent paint may be used for the paint. In the case of the colored opaque paint, the underlying resin film layer and metal base material are not seen. However, the use of the paint layer having a desired color and pattern results in the composite structural member having better design properties. The term "transparent" used in the paint and an adhesive described below indicates that the visible-light transmittance is 30% or more.

### (Adhesive Layer)

An embodiment of the present invention provides a configuration in which an adhesive layer is arranged on at least a portion interposed between the metal base material and the resin film layer.

The resin film constituting the resin film layer can be bonded to the metal base material by allowing part of the constituent resin of the resin formed article to function as an adhesive. However, the resin film and the metal base material can be more assuredly bonded together by the use of another adhesive. As the adhesive, a colored opaque adhesive may be used. In the case where the adhesive, the resin film, and the paint layer are arranged, when they (including the paint layer) are all colored transparent or colorless transparent, the metallic texture of the metal base material can be satisfactorily expressed to provide a composite structural member having a high metallic texture. When the adhesive layer is entirely arranged between the metal base material and the resin film layer, high joining strength is provided.

### [Specific Gravity]

The composite structural member of the present invention has a specific gravity of 5 or less as a whole and is light in weight. Thus, the composite structural member can be suitably used for, for example, parts of mobile devices, which are required to be light in weight. To achieve the specific gravity, the proportion and the type of material of the metal base material or the proportion of the resin formed article in the composite structural member may be appropriately selected. For example, in the case where the metal base material is composed of stainless steel (specific gravity: about 8), which has a high specific gravity, a relative reduction in the proportion of the metal base material (a relative increase in the proportion of the resin formed article) results in the composite structural member having a specific gravity of 5 or less as a whole. In particular, in the case where the metal base material is composed of a lightweight metal, e.g., pure magnesium, a magnesium alloy, pure aluminum, or an aluminum alloy, even if the proportion of the metal base material in the composite structural member is relatively high, the resulting composite structural member has a specific gravity of 3 or less and even 2 or less as a whole.

### Advantageous Effects of Invention

The composite structural member of the present invention has high rigidity even at a small thickness and excellent design properties.

### Brief Description of Drawings

[Fig. 1] Figure 1(I) is a schematic cross-sectional view of a composite structural member according to a first embodiment, and Figs. 1(II) to 1(V) are explanatory drawings illustrating a production process of the composite structural member.
[Fig. 2] Figure 2(I) is a schematic cross-sectional view of a composite structural member according to a second embodiment, and Figs. 2(II) and (III) are explanatory drawings illustrating a production process of the composite structural member.
[Fig. 3] Figure 3(I) is a schematic cross-sectional view of a composite structural member according to a third embodiment, and Figs. 3(II) and (III) are explanatory drawings illustrating a production process of the composite structural member.
[Fig. 4] Figure 4(I) is a schematic cross-sectional view of a composite structural member according to a fourth embodiment, and Fig. 4(II) is a schematic cross-sectional view of a composite structural member according to a fifth embodiment, both fourth and fifth embodiments not according to the invention.

### Description of Embodiments

Embodiments of the present invention will be described below with reference to the attached drawings. In the drawings, the same elements are designated using the same numerals.

### <First Embodiment>

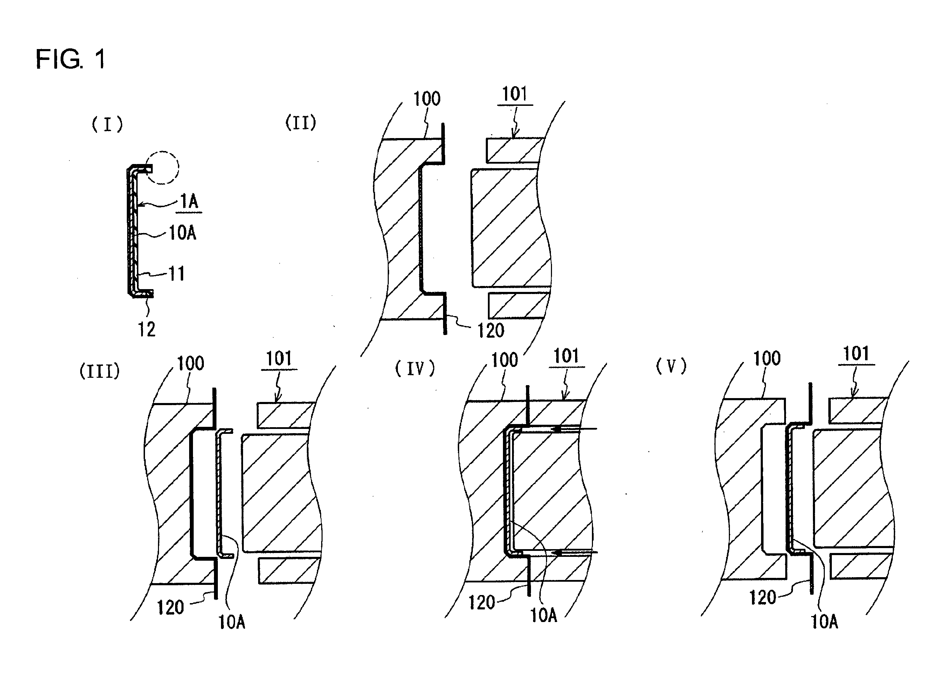

A composite structural member 1A according to a first embodiment will be described with reference to Fig. 1.

### [Composite Structural Member]

The composite structural member 1A is a laminated structure including a sheet-like metal base material 10A, a resin formed article 11, and a resin film layer 12 that partially covers a surface of the sheet-like metal base material 10A. Part of the resin formed article 11 is joined to the resin film layer 12 and the metal base material 10A into one piece.

The composite structural member 1A illustrated in this embodiment has a square bracket-shaped cross section and includes a bottom face portion and a pair of short end portions extending upright from edges of the bottom face portion, the short end portions being oppositely arranged. The composite structural member 1A has a uniform thickness as a whole (thickness: 1.0 mm). The bottom face portion has a width of 250 mm and a length of 300 mm. Each of the short end portions has a width of 250 mm and a height of 5 mm. Each of the elements will be described in more detail below.

The metal base material 10A is a plastically formed material (pressed material) formed by subjecting a magnesium alloy flat sheet material having a thickness of 0.5 mm (≥ 50 µm) and a width of 240 mm to press forming to bend the sheet material into a square-bracket shape (the size of the bottom face portion: 240 mm wide × 300 mm long, the size of each of the short end portions: 240 mm wide × 1 mm high). Here, the foregoing flat sheet material is prepared as follows: a twin roll cast material composed of a magnesium alloy having an A1 content (A1 content: 8.3% by mass to 9.5% by mass) comparable to that of an AZ91 alloy is subjected to rolling, and the resulting rolled sheet is subjected to warm flattening to provide a flat sheet material (Young's modulus: 45 GPa, 0.2% proof stress: 260 MPa, thermal expansion coefficient: 25 × 10⁻⁶ /K). For the production of the flat sheet material, known conditions may be used. After the warm flattening, various treatments, such as polishing treatment, surface finishing, for example, a diamond cut, a hairline cut, etching, blasting, and printing and inscribing of a desired letter or figure, e.g., a logotype, and anticorrosion treatment may be performed. The surface finishing is performed, thereby resulting in the metal base material 10A having a better metal texture.

The resin formed article 11 is a square bracket-shaped article formed so as to cover the entirety of a surface (inner surface) of the metal base material 10A having the square-bracket shape. Here, a constituent material of the resin formed article is composed of a polymer alloy (PC-ABS) of polycarbonate and an acrylonitrile-butadiene-styrene (ABS) resin, the polymer alloy containing a BN (boron nitride) filler in an amount of 10% by mass. The resin formed article 11 is formed by injection molding as described below. The thickness of a portion that covers the surface of the metal base material is uniform and 0.5 mm. The maximum thickness (here, the thickness of each of the pair of opposing short end portions) is 1.0 mm. In the case where the resin formed article has a boss and a rib, each of the boss and the rib may have a thickness exceeding 1.0 mm. In this embodiment, the resin formed article is formed in such a manner that the composite structural member 1A including a rib (not illustrated) has a specific gravity of about 1.4 as a whole. The specific gravity of the entire composite structural member is determined by dividing the total mass of constituent elements of the composite structural member by the volume of the composite structural member. The mass of each of the constituent elements can be measured by disassembling the composite structural member or can be determined by calculation from the product of the volume of the corresponding constituent element and the specific gravity of the corresponding constituent element.

The resin film layer 12 is formed of a resin film. Here, a colorless transparent polymethyl methacrylate film having a thickness of 150 µm is used. The resin film layer 12 is arranged so as to cover the entirety of a surface (outer surface) of a square bracket-shaped composite including the square bracket-shaped metal base material 10A and the short end portions of the resin formed article 11 continuous with the pair of opposing short end portions of the metal base material 10A. The resin film layer 12 is bonded using the constituent resin of the resin formed article 11.

As described above, the outer surface of the metal base material 10A is covered with the colorless transparent resin film layer 12, thereby sufficiently expressing the metallic texture of the metal base material 10A itself and resulting in the composite structural member 1A having excellent metallic texture. The inner surface and the end faces of the metal base material 10A are covered with the resin formed article 11, and the outer surface is covered with the resin film layer 12; hence, the metal base material 10A has excellent corrosion resistance.

In the composite structural member 1A, the bottom face portion and part of each of the short end portions have a three-layer laminated structure including the resin film layer 12, the metal base material 10A, and the resin formed article 11. The remainder is formed of the resin formed article 11 and the resin film layer 12. That is, the composite structural member 1A includes a portion composed of a resin alone.

### [Production Method]

For example, the composite structural member 1A including the foregoing configuration can be produced as described below.

As illustrated in Fig. 1(II), a resin film 120 constituting the resin film layer 12 is arranged on a first die 100. Then a second die 101 is pressed against the resin film 120 in such a manner that the resin film 120 is located along the cavity of the die 100.

Next, as illustrated in Fig. 1(III), the second die 101 is separated from the first die 100. The metal base material 10A is arranged at a predetermined position of the resin film 120.

Next, the second die 101 is transferred toward the first die 100 to form a space for producing the resin formed article 11 using both the dies 100 and 101, as illustrated in Fig. 1(IV). Here, the resin film 120 having a size sufficient for the formation of the resin film layer 12 having a predetermined size is prepared. When both the dies 100 and 101 are arranged in proximity, as illustrated in Fig. 1(IV), the resin film 120 is partially held by both the dies 100 and 101. That is, the resin film 120 is held by both dies 100 and 101 during the formation of the resin formed article 11. Thus, the resin film 120 is not displaced during the formation of the resin formed article 11, so that the composite structural member 1A can be formed with high accuracy.

A constituent resin for forming the resin formed article 11 is injected into the space defined by both the dies 100 and 101 to form the resin formed article 11 by injection molding. Simultaneously, the metal base material 10A, the resin film 120, and the resin formed article 11 are integrally bonded together using the constituent resin. After curing the constituent resin, the dies 100 and 101 are opened. The resin film 120 is appropriately cut to provide the composite structural member 1A including the resin film layer 12.

An adhesive (not illustrated) may be applied to a surface of the metal base material 10A, and then the metal base material 10A provided with the adhesive may be arranged at a predetermined position of the resin film 120 arranged on the die 100. Alternatively, as illustrated in Fig. 1(V), the resin film 120 may be bonded to the metal base material 10A with an adhesive (not illustrated) in advance. After the integral intermediate of the resin film 120 and the metal base material 10A may be arranged on the die 100, the resin formed article 11 may be formed. The adhesive may be applied to any of the metal base material 10A and the resin film 120. In the case where the adhesive is used, a composite structural member including an adhesive layer (not illustrated) arranged between the metal base material and the resin film layer is produced. In the case where the adhesive is used as described above, the metal base material 10A and the resin film 120 are not substantially displaced during the formation of the resin formed article 11, thereby resulting in a composite structural member with excellent position accuracy. Furthermore, the composite structural member having the adhesive layer has excellent adhesion between the metal base material and the resin film layer, thus inhibiting the separation of the resin film. These configurations using the adhesive may also be applied to embodiments described below.

### [Advantageous Effects]

The composite structural member 1A having the configuration described above has high rigidity and high strength even at a small thickness (the maximum thickness of the embodiment 1A: 1.0 mm), as compared with a resin member composed of a resin alone. Thus, in the composite structural member 1A, denting and deformation do not occur easily, so that a predetermined shape can be maintained over prolonged periods of time. In particular, in the composite structural member 1A, the metal base material 10A includes the bent portions formed by press forming and thus has high rigidity. Hence, the composite structural member 1A has excellent rigidity. Furthermore, in the composite structural member 1A, the lightweight magnesium alloy is used as a constituent metal of the metal base material 10A, so that the composite structural member 1A has a low specific gravity of 2 or less as a whole.

An attaching portion, such as a claw portion, a bolt hole, or a tapped hole, can be easily formed in part of the resin formed article 11, for example, a part, surrounded by a broken-line circle, composed of the resin alone illustrated in Fig. 1(I). The composite structural member including the attaching portion is easily attached to a predetermined target object with or without a bolt or screw and thus has excellent mounting workability. Furthermore, the composite structural member includes a nonmetallic portion (nonconductive portion) composed of the resin alone and thus is suitably used for parts of electrical and electronic devices that establish radio communications and so forth.

The composite structural member 1A includes the resin film layer 12 functioning as a decorating member and thus has high-quality appearance and excellent design properties. Such a configuration having the excellent design properties can be easily formed. Thus, the composite structural member 1A also has excellent productivity. In addition, the resin film layer 12 also functions as a corrosion-resistant layer and a surface protective layer for the metal base material 10A. Hence, the composite structural member 1A can maintain the excellent appearance over prolonged periods of time.

### <Embodiments 2 and 3>

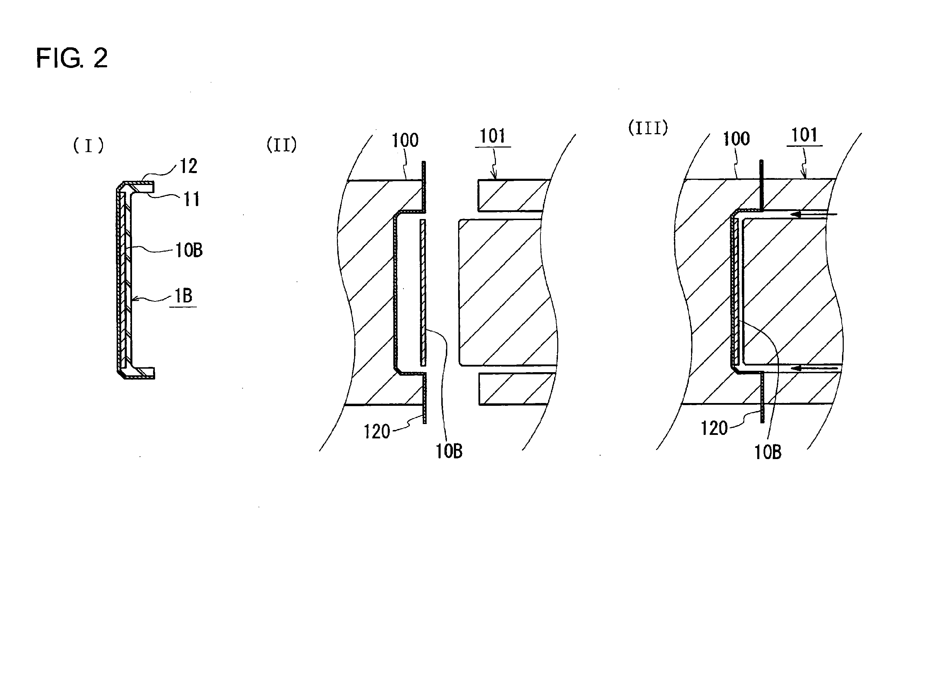

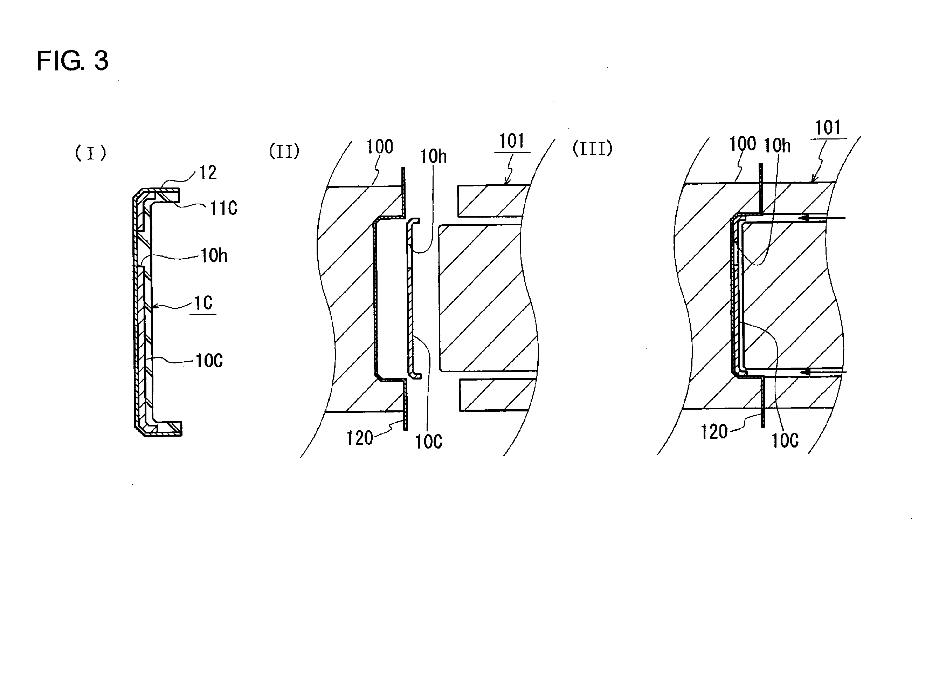

A composite structural member 1B according to a second embodiment will be described with reference to Fig. 2. A composite structural member 1C according to a third embodiment will be described with reference to Fig. 3. The basic configuration of each of the composite structural members 1B and 1C is the same as that of the composite structural member 1A according to the first embodiment, only the shapes of metal base materials 10 and 10C are different. Here, the different points will be described, and descriptions of other configurations and advantageous effects are omitted.

The metal base material 10B included in the composite structural member 1B is a flat sheet material that is not subjected to press forming unlike the metal base material 10A according to the first embodiment. The flat sheet material is used for the metal base material 10B. Thus, the metal base material 10B has the following advantages and excellent economics: (1) the metal base material can be easily produced and thus has excellent productivity; and (2) the metal base material has a simple shape and thus is easily arranged on the die in the production of the composite structural member.

The metal base material 10C included in the composite structural member 1C is a square bracket-shaped pressed material similar to the metal base material 10A according to the first embodiment. The metal base material 10C includes a circular through hole 10h in the bottom face portion and is different in that the through hole 10h is filled with a constituent resin of a resin formed article 11C. The use of the metal base material 10C including the through hole 10h increases the joining area between the metal base material 10C and the resin formed article 11C and the joining area between the resin film layer 12 (resin film 120) and the resin formed article 11C, thereby increasing the adhesion among the metal base material 10C, the resin film layer 12, and the resin formed article 11C. The adhesion is easily enhanced by arranging a plurality of the through holes, increasing the opening area of the thorough hole, or changing the shape of the through hole. Thus, for example, the foregoing adhesive can be omitted. A portion inside the through hole 10h is composed of the resin alone. In the composite structural member 1C, such a portion composed of the resin alone can be easily formed. The portion composed of the resin alone may be used as a nonconductive portion as described above or may be used as a design. Furthermore, the presence of the through hole 10h reduces the proportion of the metal base material 10C in the composite structural member 1C. Thus, in this configuration, a reduction in the weight of the composite structural member is achieved. The shape, number, size, and so forth of the through hole formed in the metal base material can be appropriately selected in view of the adhesion and design.

The composite structural members 1B and 1C can be produced as the composite structural member 1A according to the first embodiment. That is, the resin film 120 and either metal base material 10B or metal base material 10C are arranged on the first die 100. A constituent resin of the resin formed article 11 or the resin formed article 11C is injected into a space defined by the dies 100 and 101 and then cured to integrate the metal base material 10B or the metal base material 10C, the resin film 120, and the resin formed article 11 or the resin formed article 11C, thereby producing the composite structural member 1B or1 C.

### <Fourth Embodiment>, not according to the invention

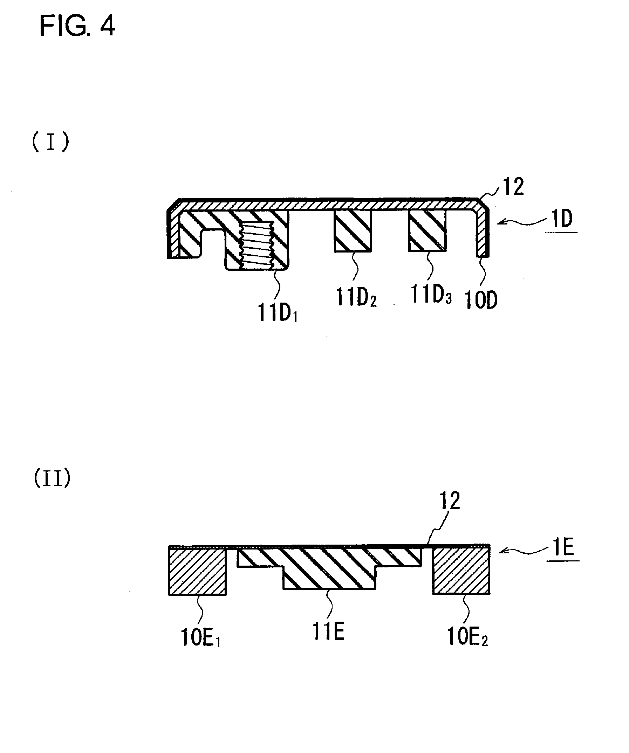

A composite structural member 1D according to a fourth embodiment will be described with reference to Fig. 4(I). In each of the first to third embodiments, the configuration in which the resin formed article is a single continuous component has been described. Furthermore, in each of the first to third embodiments, a configuration in which the resin formed article is joined to both the metal base material and the resin film layer has been described. Meanwhile, the composite structural member 1D includes a plurality of resin formed articles 11D₁, 11D₂, and 11D₃. Furthermore, in the composite structural member 1D, the resin film layer 12 is joined to only a surface of a metal base material 10D. The resin formed articles 11D₁, 11D₂, and 11D₃ are not joined to the resin film layer 12.

The resin formed articles 11D₁, 11D₂, and 11D₃ can be used for different applications. For example, the resin formed article 11D₁ can be used as an attaching portion where a claw portion, a tapped hole, or a bolt hole is formed (bolt hole in Fig. 4(I)), and the resin formed articles 11D₂ and 11D₃ can be used as ribs configured to enhance the rigidity of the composite structural member 1D. This point can also be true for a fifth embodiment described below.

The composite structural member 1D can be basically produced as the composite structural member 1A according to the first embodiment. However, dies having appropriate shapes such that the desired shaped resin formed articles 11D₁, 11D₂, and 11D₃ are formed at predetermined positions of the composite structural member 1D are prepared. The resin film and the metal base material 10D are integrated using an adhesive. As described above, the configuration in which the plural resin formed articles are independently arranged at desired positions of the metal base material 10D can be achieved, thus providing a high degree of flexibility in the design of the composite structural member.

The composite structural member 1D according to the fourth embodiment is the same as the composite structural member 1A according to the first embodiment, except for the foregoing joining state of the metal base material, the resin formed article, and the resin film layer and the shape of the resin formed article. Descriptions of the configuration other than the points of difference described above and the advantageous effects are omitted. This point can also be true for the fifth embodiment described below.

### <Fifth Embodiments>, not according to the invention

A composite structural member 1E according to the fifth embodiment will be described with reference to Fig. 4(II). The composite structural member 1E includes a plurality of metal base materials 10E₁ and 10E₂. A surface of each of the metal base materials 10E₁ and 10E₂ and a resin formed article 11E is joined to the resin film layer 12. However, the metal base materials 10E₁ and 10E₂ and the resin formed article 11E are not joined together.

The composite structural member 1E can be basically produced as in the composite structural member 1A according to the first embodiment. However, appropriate dies such that the desired shaped resin formed article 11E is formed at a predetermined position of the resin film is prepared. The resin film and the metal base materials 10E₁ and 10E₂ are integrated using an adhesive. As described above, the configuration in which the plural metal base materials 10E₁ and 10E₂ and the resin formed article 11E are integrated on the resin film layer 12 and are separately arranged can be achieved, thus providing a high degree of flexibility in the design of the composite structural member. In the fifth embodiment, a plurality of resin formed articles can be arranged as in the fourth embodiment.

### <Sixth Embodiment>, partially according to the invention

As the resin film constituting the resin film layer according to each of the first to fifth embodiments, a resin film including a plurality of minute through holes (not illustrated) can be used. For example, in the case of using a resin film in which a plurality of through holes are uniformly arranged over the entire surface of the resin film, the circumcircle of each of the through holes having a diameter of 100 µm or less, when the resin film and the metal base material are joined together, degassing can be sufficiently performed therebetween. It is thus possible to effectively inhibit the inclusion of bubbles therebetween and reduce the occurrence of poor appearance due to the presence of bubbles. In particular, in the case where a resin film in which the area fraction of the through holes in the resin film is in the range of about 1% to about 10% is used and where a surface of the metal base material is covered with the resin film, the formation of the bubbles can be inhibited without reducing the corrosion resistance of the metal base material.

In a portion of the resin film layer that covers the resin formed article, the through holes are not associated with corrosion resistance. Thus, the size and the area fraction of the through holes may be increased. For example, in the case where the through holes are increased in size to the extent that the circumcircle of each of the through holes has a diameter of 2 mm or less, degassing is more easily performed. As described above, the size, the shape, and the area fraction of the through holes can be changed, depending on an object to be covered with the resin film. The through holes can be formed using, for example, production conditions of a waterproof breathable film or the like. A commercially available perforated film may be used as the resin film constituting the resin film layer.

### <Seventh Embodiment>, partially according to the invention

In each of the first to sixth embodiments, the metal base material composed of the magnesium alloy corresponding to the AZ91 alloy is used. Alternatively, a magnesium alloy having another composition may be used. Pure magnesium may be used. Examples of a material that can be used in place of the magnesium alloy include titanium and titanium alloys (for example, they have a Young's modulus of 90 GPa to 150 GPa, a 0.2% proof stress of 700 MPa to 1,500 MPa, and a thermal expansion coefficient of 5 × 10⁶/K to 30 × 10⁻⁶ /K); aluminum and aluminum alloys (for example, they have a Young's modulus of 50 GPa to 500 GPa, a 0.2% proof stress of 50 MPa to 500 MPa, and a thermal expansion coefficient of 5 × 10⁻⁶ /K to 30 × 10⁻⁶ /K); and iron and iron alloys (for example, they have a Young's modulus of 100 GPa to 250 GPa, a 0.2% proof stress of 400 MPa to 1,200 MPa, and a thermal expansion coefficient of 5 × 10⁻⁶ /K to 30 × 10⁻⁶ /K). While the pressed material is used as the metal base material, for example, a cast material, a rolled material, a forged material, a treated material obtained by subjecting the material to various treatments, such as heat treatment, may also be used.

### <Eighth Embodiment>, partially according to the invention

In each of the first to seventh embodiments, the configuration in which the metal base material has a substantially uniform thickness over the entire metal base material has been described. Alternatively, the metal base material may have partially different thicknesses. For example, the metal base material may have a protrusion or a depression. The protrusion may function as, for example, a stiffening rib. The depression may function as, for example, a design or may be used for a reduction in weight.

### <Ninth Embodiment>, partially according to the invention

In each of the first to eighth embodiments, the configuration including the colorless transparent resin film layer has been described. Alternatively, a colored transparent resin film layer or a resin film layer including a thin layer composed of a metal or a compound may be used to correspond to various designs. A commercially available film may be appropriately used for the resin film.

### <Tenth Embodiment>, partially according to the invention

In each of the first to ninth embodiments, the configuration in which part of the appearance of the composite structural member is constituted by the resin film layer has been described. Alternatively, a configuration in which the composite structural member further includes a paint layer arranged on at least part of the resin film layer may be used. The further arrangement of the paint layer results in the enhancement of the water resistance and hardness of the composite structural member. In the case where both the paint layer and the resin film layer are arranged in such a manner that the paint layer is partially arranged, it is possible to express a design formed by both layers.

### Industrial Applicability

A composite structural member of the present invention can be suitably used for parts of various electrical and electronic devices, in particular, housings of mobile or small electrical and electronic devices, and parts required to have high strength and high rigidity in various fields.

### Reference Signs List

1A, 1B, 1C, 1D, 1E composite structural member
10A, 10B, 10C, 10D, 10E₁, 10E₂ metal base material; 10h through hole
11, 11C, 11D₁, 11D₂, 11D₃, 11E resin formed article; 12 resin film layer
100, 101 die; 120 resin film

## Claims

1. A composite structural member comprising:
a metal base material;
a resin formed article; and
a resin film layer that covers at least part of a surface of the metal base material, wherein:
at least part of the metal base material has a thickness of 50 µm or more,
at least part of the resin formed article is joined to at least one of the metal base material and the resin film layer,
the composite structural member has a square bracket-shaped cross section and includes a bottom face portion and a pair of short end portions extending upright from edges of the the bottom face portion, the short end portions being oppositely arranged, and
more than 50 % by area of the metal base material has a thickness of from 0.3 to 1.5 mm.

2. The composite structural member according to Claim 1, wherein a portion of the metal base material has a thickness exceeding 2 mm.

3. The composite structural member according to Claim 1 or Claim 2, wherein the resin film layer includes a plurality of through holes, and
wherein the circumcircle of each of the through holes has a diameter of 100 µm or less.

4. The composite structural member according to any one of Claims 1 to 3, further comprising a paint layer on at least part of the resin film layer.

5. The composite structural member according to any one of Claims 1 to 4, wherein at least part of the metal base material is composed of at least one of pure magnesium and magnesium alloys.

6. The composite structural member according to any one of Claims 1 to 5, wherein at least part of the metal base material is composed of at least one of pure titanium and titanium alloys.

7. The composite structural member according to any one of Claims 1 to 6, wherein the resin film layer has a visible-light transmittance of 30% or more.

8. The composite structural member according to any one of Claims 1 to 7, wherein an adhesive layer is arranged on at least a portion interposed between the metal base material and the resin film layer.

9. The composite structural member according to any one of Claims 1 to 8, wherein at least part of the metal base material is composed of at least one metal selected from pure aluminum, aluminum alloys, iron, and iron alloys.

## Patentansprüche

1. Strukturelles Verbundstoffelement, umfassend:
ein Metallgrundmaterial;
einen aus einem Harz gebildeten Gegenstand; und
eine Harzfilmschicht, die zumindest einen Teil einer Oberfläche des Metallgrundmaterials bedeckt, wobei:
mindestens ein Teil des Metallgrundmaterials eine Dicke von 50 µm oder mehr hat,
mindestens ein Teil des aus einem Harz gebildeten Gegenstandes mit mindestens einem von dem Metallgrundmaterial und der Harzfilmschicht verbunden ist,
das strukturelle Verbundstoffelement einen Querschnitt in Form einer eckigen Klammer hat und einen Bodenflächenbereich und ein Paar von kurzen Endbereichen umfasst, die sich von Kanten des Bodenflächenbereichs nach oben erstreckten, wobei die kurzen Endbereiche entgegengesetzt angeordnet sind, und
mehr als 50 % der Fläche des Metallgrundmaterials eine Dicke von 0,3 bis 1,5 mm hat.

2. Strukturelles Verbundstoffelement nach Anspruch 1, in dem ein Teil des Metallgrundmaterials eine Dicke von mehr als 2 mm hat.

3. Strukturelles Verbundstoffelement nach Anspruch 1 oder Anspruch 2, in dem die Harzfilmschicht eine Mehrzahl von Durchgangslöchern umfasst, und
in dem der Umkreis von jedem der Durchgangslöcher einen Durchmesser von 100 µm oder weniger hat.

4. Strukturelles Verbundstoffelement nach einem der Ansprüche 1 bis 3, ferner umfassend eine Farbschicht auf mindestens einem Teil der Harzfilmschicht.

5. Strukturelles Verbundstoffelement nach einem der Ansprüche 1 bis 4, in dem zumindest ein Teil des Metallgrundmaterials aus mindestens einem von reinem Magnesium und Magnesiumlegierungen besteht.

6. Strukturelles Verbundstoffelement nach einem der Ansprüche 1 bis 5, in dem mindestens ein Teil des Metallgrundmaterials aus mindestens einem von reinem Titan und Titanlegierungen besteht.

7. Strukturelles Verbundstoffelement nach einem der Ansprüche 1 bis 6, in dem die Harzfilmschicht eine Durchlässigkeit für sichtbares Licht von 30 % oder mehr hat.

8. Strukturelles Verbundstoffelement nach einem der Ansprüche 1 bis 7, in dem eine Klebeschicht auf mindestens einem Bereich angeordnet ist, der zwischen dem Metallgrundmaterial und der Harzfilmschicht liegt.

9. Strukturelles Verbundstoffelement nach einem der Ansprüche 1 bis 8, in dem mindestens ein Teil des Metallgrundmaterials aus mindestens einem Metall besteht, das aus reinem Aluminium, Aluminiumlegierungen, Eisen und Eisenlegierungen ausgewählt ist.

## Revendications

1. Elément structurel composite comprenant :
un matériau de base métallique ;
un article réalisé en résine ; et
une couche de film de résine qui recouvre au moins une partie d'une surface du matériau de base métallique, dans lequel :
au moins une partie du matériau de base métallique a une épaisseur de 50 µm ou plus,
au moins une partie de l'article réalisé en résine est jointe à au moins l'un du matériau de base métallique et de la couche de film de résine,
l'élément structurel composite a une section transversale en forme de support carrée et comprend une partie de face inférieure et une paire de courtes parties d'extrémité s'étendant vers le haut à partir des bords de la partie de face inférieure, les courtes parties d'extrémité étant agencées de manière opposée, et
plus de 50 % par aire du matériau de base métallique a une épaisseur de 0,3 à 1,5 mm.

2. Elément structurel composite selon la revendication 1, dans lequel une partie du matériau de base métallique a une épaisseur supérieure à 2 mm.

3. Elément structurel composite selon la revendication 1 ou la revendication 2, dans lequel la couche de film de résine comprend une pluralité de trous traversants, et
dans lequel le cercle circonscrit de chacun des trous traversants a un diamètre de 100 µm ou moins.

4. Elément structurel composite selon l'une quelconque des revendications 1 à 3, comprenant en outre une couche de peinture sur au moins une partie de la couche de film de résine.

5. Elément structurel composite selon l'une quelconque des revendications 1 à 4, dans lequel au moins une partie du matériau de base métallique est composée d'au moins l'un du magnésium pur et d'alliages de magnésium.

6. Elément structurel composite selon l'une quelconque des revendications 1 à 5, dans lequel au moins une partie du matériau de base métallique est composée d'au moins l'un du titane pur et d'alliages de titane.

7. Elément structurel composite selon l'une quelconque des revendications 1 à 6, dans lequel la couche de film de résine a une transmittance de la lumière visible de 30 % ou plus.

8. Elément structurel composite selon l'une quelconque des revendications 1 à 7, dans lequel une couche adhésive est agencée sur au moins une partie interposée entre le matériau de base métallique et la couche de film de résine.

9. Elément structurel composite selon l'une quelconque des revendications 1 à 8, dans lequel au moins une partie du matériau de base métallique est composée d'au moins un métal sélectionné parmi l'aluminium pur, des alliages d'aluminium, le fer et des alliages de fer.
